# EUROPEAN PATENT SPECIFICATION

(11) **EP 1 752 396 B1**
(45) Date of publication and mention of the grant of the patent: **05.03.2008**
(21) Application number: 06122559.5
(22) Date of filing: 24.01.2003
(51) Int. Cl.: B65G 33/14, B65G 65/06, B65G 65/28, B65G 65/46

(54) **Apparatus for storage and unloading of granular material**
Vorrichtung zum Speichern und Entladen von Granulat
Appareil permettant de stocker et de décharger un matériau granulaire

(43) Date of publication of application: 14.02.2007
(62) Divisional of application: 03700326.6
(73) Proprietor: Metso Paper, Inc., 00100 Helsinki (FI)
(72) Inventor: Jonkka, Arvo, 28430 Pori (FI)
(74) Representative: Haimelin, Jukka Ilmari

(56) References cited:
- SE-C2- 516 935
- US-A- 3 509 985
- US-A- 3 661 283

## Description

The invention relates to an apparatus for storage of wood chips in an open-yard or silo storage as a conical or curved-top stockpile and, respectively, for unloading material from this type of stockpile. While the invention is particularly advantageously related to the storage of wood chips, it is also suited for use in the storage of other granular material such as bark, coal, grain and the like.

It is known to store chips in stockpiles by a method wherein chips are stacked in a curved-top pile having typically a diameter of 80 to 150 m and a height of 20 to 30 m. In these methods, green chips are stacked at one end of the stockpile while earlier stored chips are unloaded from the other end. By virtue of this method, the storage time of chips can be kept optimal in regard to the later processing steps inasmuch the stockpile is always unloaded at the end containing the longest stored chips.

In conventionally used chip storage facilities meeting the above requirements, green chips are transported over the top level of the stockpile by means of a belt conveyor, adapted to operate in a conveyor bridge, to the upper portion of a tower-like structure located in the center of the curved-top stockpile. Below the conveyor bridge, on the top portion of the tower structure is supported a rotatable boom. Chips are dropped via a hopper onto a belt conveyor adapted into the boom which in this manner creates a curved stockpile around the tower. The top of the stockpile is kept at a constant height with the help of an automatic level sensor. The chips are unloaded from the stockpile by means of a rotary reclaim conveyor bridge that houses a reclaim conveyor and is connected to the lower portion of the tower by its one end. To the distal end of the reclaim conveyor bridge are mounted driven wheels that run on the storage yard along a track encircling the stockpile. As known in the art, the reclaim conveyor may be a drag conveyor or, alternatively, an auger conveyor equipped with one or more augers. To the reclaim conveyor bridge is further adapted a rake-like lattice which is adapted to move reciprocatingly driven in the direction of the reclaim conveyor bridge so as to collapse the stockpile onto the reclaim conveyor. The reclaim conveyor bridge has in a reclaim system of this type a length of 40 to 70 m, and is consequently quite heavy, having completely equipped a weight of 50 to 100 tons.

The reclaim conveyor transfers chips into an open hopper located in the foot of the tower, conventionally embedded in the foundation construction, and forming a circulating ring around the tower, from which hopper the chips fall onto a conveyor located beneath the chip storage, and delivering the chips from the storage area. As a security issue it is to be noted that this kind of open hopper is not well suited for the purpose because besides the chips, also other items may fall into it, including operating personnel, animals and other non-intended obstacles.

Such an apparatus is known from US-A-3 509 985.

Curved-top pile storages for chips are also known where the chips are reclaimed from the surface of the pile, and transported further from the ground level. Said storage system is, however, not very suited for utilizing an optimized storage time, because the stationary transport conveyor cuts the pile constantly at a same location.

As a controlled unloading capacity is required from the apparatus of the invention, the machinery turning the heavy unloading bridge must be controlled and furnished with a control drive of its own. Similarly the unloading auger in the bridge must be furnished with a controlled drive of its own or even in some cases with two drives. The transportation conveyor delivering the chips further from the unloading bridge has its own operation requirements. The apparatus of the invention is to be continuously operating, and longer service stops are not allowed, and especially a situation where the storage becomes empty, is totally excluded. This means that the robust machinery parts are to be quite easily and quickly to be serviced, and the service personnel must have access to the locations requiring inspection and service.

The essential characterizing features of an apparatus implementing the invention are disclosed in appended claims.

Next, the invention will be examined in greater detail by making reference to the appended drawings, wherein
FIG. 1 is a side view of an apparatus stacking and unloading a curved-top stockpile according to a conventional procedure;
FIG. 2 is a side view of a storage apparatus according to the invention stacking and unloading a curved-top stockpile;
FIG. 3 discloses an intermediate support for the unloading bridge;
Fig. 4 illustrates the material delivery to the hopper;
Fig. 5 illustrates a sectional view of the feet portion of the tower, seen from above;
Fig. 6 is a sectional view A-A from Fig. 6 seen in upright position; and
Fig. 7 illustrates the construction of the lifting conveyor.

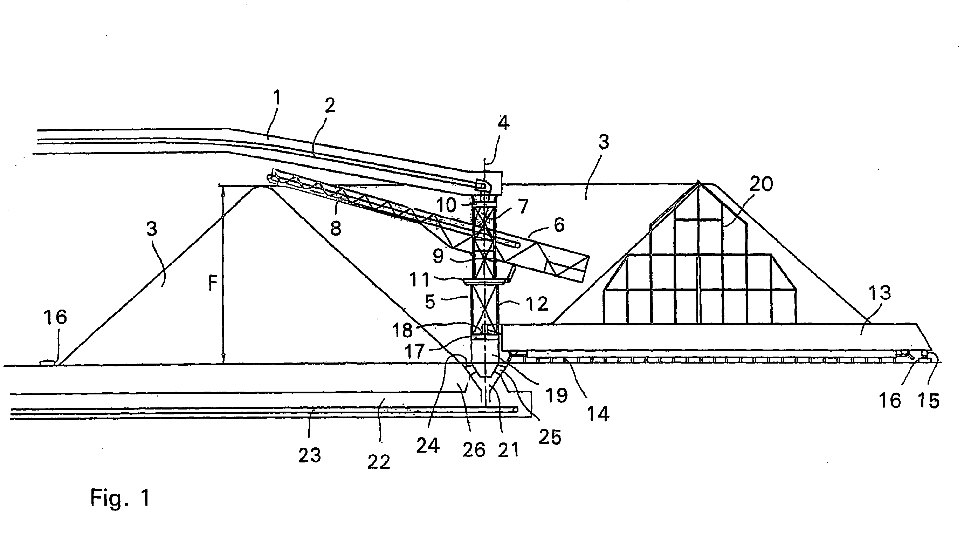

Referring to FIG. 1, therein is illustrated a prior system stacking and unloading a curved-top stockpile. Chips are transported by means of a conveyor 2, conventionally a belt conveyor, adapted to operate in a conveyor bridge 1, into a tower-like central structure 5 located to the center of a curved-top stockpile 3. Below the conveyor bridge 1, on the upper portion of the central tower 5 is supported a stacking boom 6 capable of rotating about the center 4 of the tower. Chips are passed via a hopper 7 onto a belt conveyor 8 operating in the interior of the stacking boom such that a stockpile 3 essentially surrounding the central tower is created. The stacking boom 6 is connected to the boom support portion 9 of the tower that is mounted in bearing 10 on the conveyor bridge and in bearing 11 on the lower portion 12 of the tower. The stack is diminished by a unloading conveyor bridge 13 which is supported at its one end on the lower part of 12 of the tower, and rotating to certain direction around the tower center 4. To the outer end of the unloading conveyor bridge 13 is mounted a driven support wheel assembly 15 that runs along a track 16 encircling the curved-top stockpile 3. While the embodiment of FIG. 1 uses a drag conveyor 14 as the unloading conveyor, alternatively an auger conveyor may be employed. The lower portion 12 of the tower having the unloading conveyor bridge 13 connected thereto by a pivot pin 18 is mounted in bearing 11 to the boom support portion 9 of the tower and in bearing 17 to a foundation frame 19 of the tower.

In the unbloading conveyor bridge 13 is further adapted to include a rake-like lattice 20 which is adapted to move collapse the stockpile 3 onto the unloading conveyor 14. The unloading conveyor transfers chips into a hopper 21, which is located around the bottom of the tower. The outer diameter of the annular opening is on the top 6 to 8 meters. The opening 24 diminishes below the tower to a funnel 21, from which the chips fall onto a conveyor 23 located in a tunnel 22 below the stockpile 3 and transferring chips away from the storage. The bottom 19 of the tower is supported on the ground foundation 26 by beams 25 crossing the opening 24.

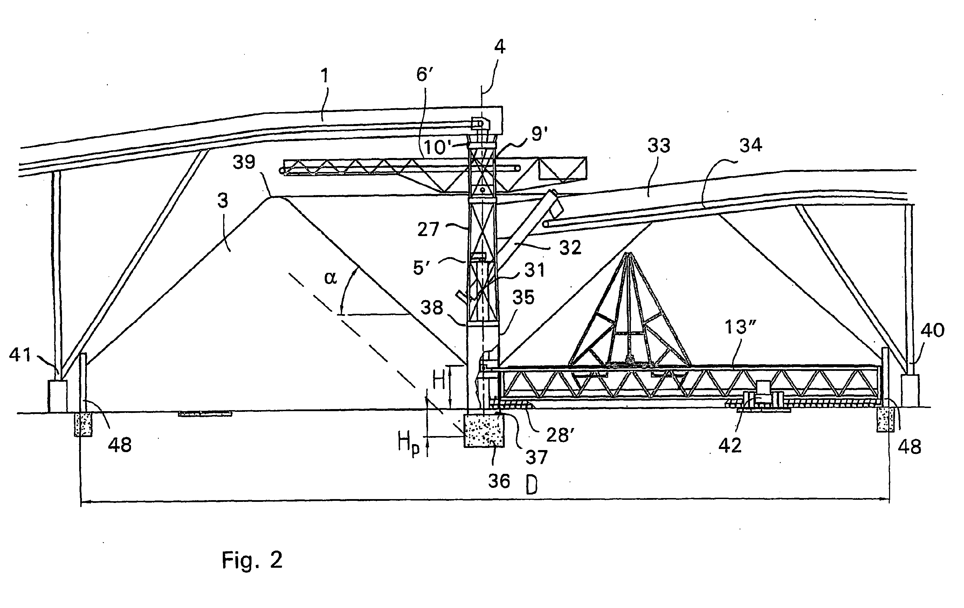

Now referring to FIG. 2, therein is shown a storage apparatus according to the present invention. The stockpile 3 is created in the same fashion as described above. A boom portion 9' of a tower is at its top end connected to the conveyor bridge in bearing 10'. The lower part of the boom portion 9' of the tower is mounted in bearing to a stationary center portion 27 of the tower.

In FIG. 2, the unloading conveyor adapted to the unloading conveyor bridge 13" is shown to be an auger conveyor 28'. The unloading conveyor 28' feeds chips to a two-part vertical screw conveyor 31. The vertical screw conveyor 31 elevates chips onto an uphill-angled auger conveyor 32 that further transfers chips onto a belt conveyor 34 operating at a lower level on a bridge 33. Alternatively, the vertical screw conveyor 31 may be arranged to elevate chips directly onto the belt conveyor 34. It is beneficial of using a two-part vertical screw conveyor 31 in the invention because the lower portion 35 of the tower to rotate about the tower center 4 independently from the stationary middle portion 27 of the tower. The lower portion 35 of the tower is mounted to a foundation 36 in bearing 37 and to the stationary middle portion 27 of the tower in bearing 38.

The lower conveyor bridge 33 is attached to the stationary center portion 27 of the tower, wherefrom the conveyor bridge travels over the stockpile 3 or even tangentially to the top of the stockpile top 39, whereby the starting level of the chip transportation path from the storage is almost equal to the stockpile height. By way of orienting the lower 33 and the upper 1 conveyor bridges in different directions, the tower can be supported at its top from different directions by support feet 40 and 41 against wind forces imposed thereon. In contrast, a conventional storage facility having the tower supported by one conveyor bridge only needs very rigid foundation constructions to cope with wind forces. As a result, an apparatus according to the invention can have a lighter foundation that only needs to bear the weight of the apparatus.

The outer end of the unloading bridge is supported by a carriage 42 at a distance about 1/3 from the outer circle of the traveling path of the unloading bridge. It is beneficial to arrange the support for the unloading bridge at a certain distance from the end of the bridge in cases where the length of the bridge exceeds the length commonly used. The intermediate support forms a steady construction with moderate costs. Especially this is beneficial in connection with unloading bridges with a length of over 60 meters.

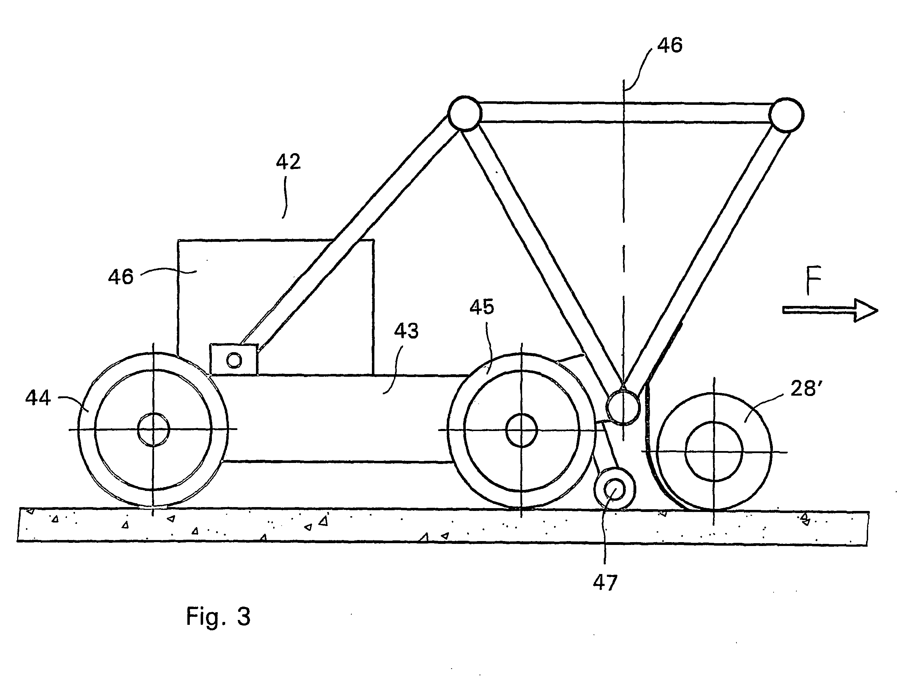

The carriage 42 disclosed on Fig. 3 consists of a carriage chassis 43, of wheels 44, 45 and of a counter-weight 46. The counter-weight is needed to balance the bridge 13", because the subsequent wheels 44, 45 of the carriage 42 are disposed on the same site from the balance point of the bridge 13". The balance point is in the vicinity of the middle point 46 of the bridge 13". The transport screw 28' is positioned on the opposite site of the bridge in respect to the carriage 42. An arrow F marks the moving direction of the bridge. A cleaning device 47 is assembled behind the screw 28' for brushing the travelling path of the wheels 44, 45.

In an apparatus according to the invention, the inner perimeter of the stockpile can be allowed to rest against the tower up to a height H (most advantageously H is 2 to 4 m), as indicated in Fig. 2. Then, the lower portion of the tower is made from sheet plate at least up to the height H. A conventional apparatus construction has a discharge funnel made at the root of the tower, whereby H is smaller than zero meters (generally so that H is about -1 m), in Fig. 3 Hₚ. Assuming the stockpile envelope angle to be α, the stockpile can be moved closer to the tower center by a distance H / tan α. In the case of chip storage, this distance is about 4.5 meters. As a result, diameter D of the footprint required by the chip storage according to the present invention is 9 meters smaller than in conventional storage arrangements according to Fig. 1.

When the unloading bridge is furnished with an intermediate support the diameter D of the curved-top pile can be further diminished without limiting the storage volume by slightly increasing the pile height. This becomes possible when a wall 48 surrounding the pile is in use, as depicted in Fig. 2. In case the height of the wall is 2 meters, the outer diameter of the pile can be diminished by about 4 meters. Proper service doors are naturally to be included in the wall.

Due to the above mentioned measures resulting to a diminishing in the pile diameter the support beams 40, 41 for the transport bridges can be positioned closer to the center 4 of the pile. Consequently, lighter constructions in the bridges 1 and 33 are possible.

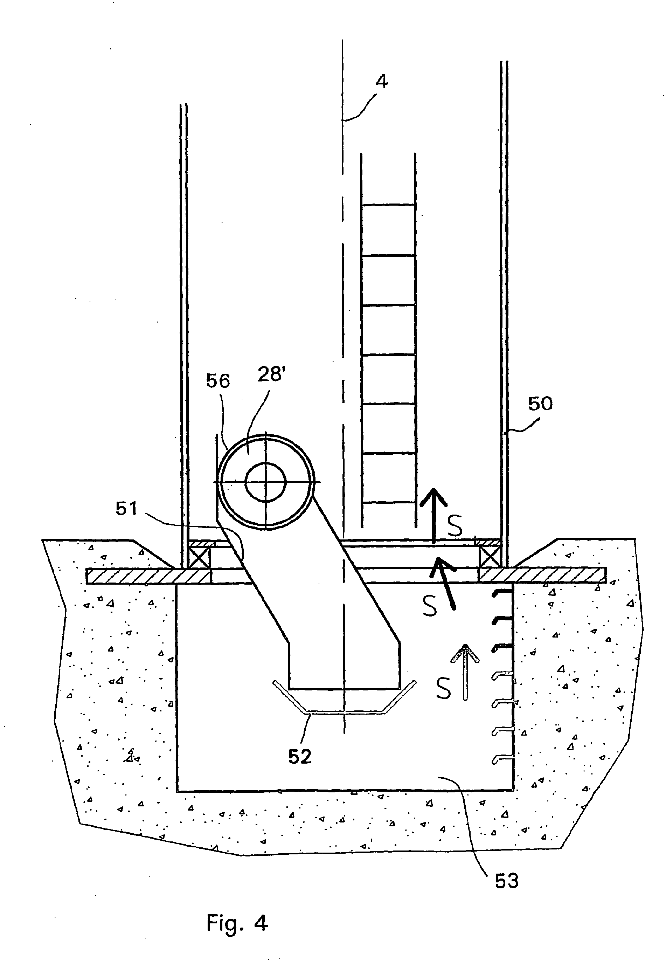

Unloading of the chips from the pile in the apparatus of the invention may be arranged either over the pile as depicted in Figs. 2, 5 and 7, or under the pile, as depicted in Fig. 4. In either of the cases the material to be unloaded is transported inside of the mantle 50 of the tower, where it is directed either upwards or downwards. In Fig. 4 a screw conveyor 28' transport the material in a tube 56 to a funnel 51 inside the tower, and further onto a lower band conveyor 52. In this case the material is transported further below the pile, as depicted in Fig. 1. Due to the construction it is possible to the service personnel to approach the tower from the tunnel 53 below the pile in the direction of the arrows S, as well as in the return direction. This is an essential security advantage. Also the control of the process, in addition to the service, is easier.

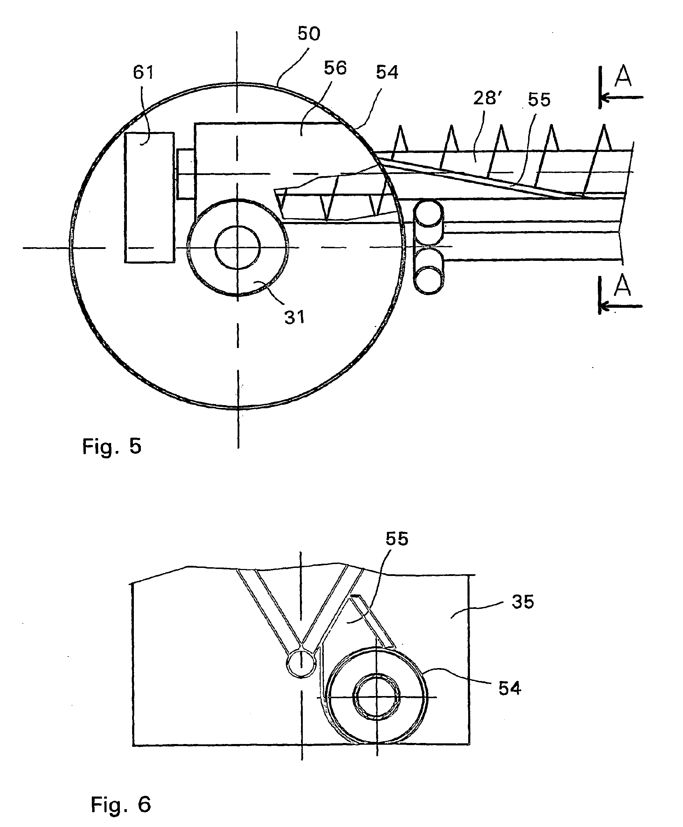

Drawing figures 5 and 6 show the connection between the screw 28' and the lower part 35 of the tower. The screw 28' is passed through an opening 54 in a, at least in its lower part contiguous mantle 50. The screw 28' transports the material along a guidance wall 55 towards an opening 54 in the tower mantle. Inside the mantle 50 the screw is surrounded by a screw chute 56, along which the material is transported to a lifting screw 31 positioned in the center of the tower.

When an intermediate support for the unloading bridge 13" is used, the drive 61 for the screw 28' is positioned in the lower part 35 of the tower, inside the mantle 50.

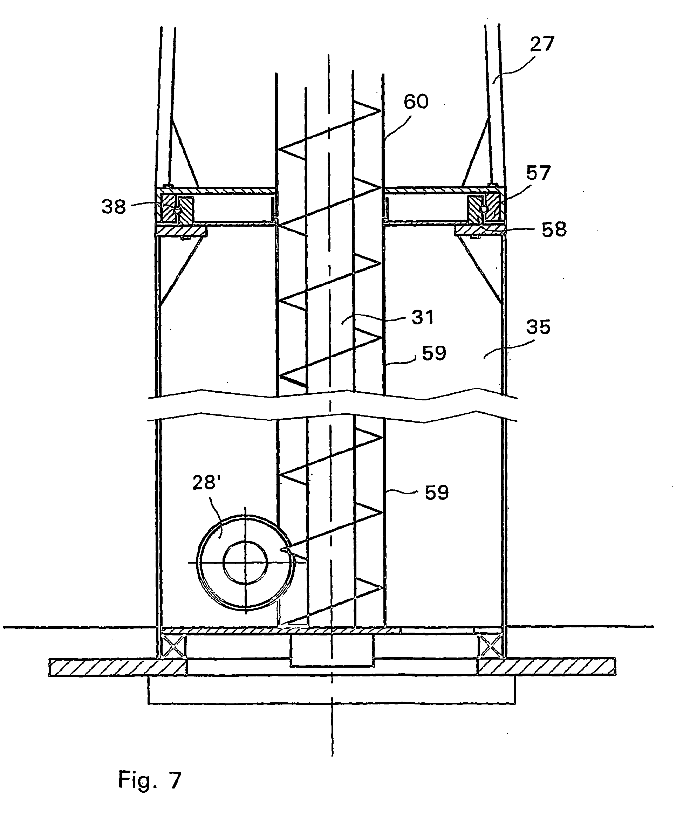

The bearing construction 38 between the lower part 35 of the tower and the stationary middle part 27 is presented in the drawing figure 7. The outer ring 57 of the bearing is attached to the stationary middle part 27 of the tower, and the inner ring 58 is attached to the rotating lower part 35 of the tower. The mantle of the vertical screw 31 consists of two parts. The lower part 59 of the mantle is attached to the rotating lower part 35 of the tower and the parts rotate together along the unloading bridge 13', 13". The upper part 60 of the mantle is firmly supported on the stationary middle part 27 of the tower. It is important to center the halves of the mantle of the vertical screw 31, wherefor the halves can alternatively be connected by bearings to each other in order to avoid a radial mutual displacement of the halves.

## Claims

1. An apparatus for storage of wood chips in a curved-top stockpile (3) the apparatus consisting of a central tower (5'), which supports a conveyor for loading the chips and a beam-like turning pile composer (6'), and an unloading beam (13") supported on ground level on the lower part (35) of the tower as well as on supporting wheels (29, 44, 45) and furnished with unloading devices (28') for transporting the wood chips towards the center (4) of the apparatus, **characterized in that**
- a carriage (42) has been arranged for supporting the unloading beam (13") at a distance about 1/3 from the outer end of the beam,
- the unloading screw (28') is driven solely by a drive device (61) positioned inside the tower
- the stockpile yard is furnished with a wall (48) within the reach of the unloading screw (28') removing the material.

2. The apparatus according to claim 1, **characterized in that** the central tower is furnished at one side with a tube-like ex-centric opening (54) for receiving the wood chips, and that a central tube (51, 59) is occupied inside the tower for directing the wood chips upwards or downwards from the opening, whereby a service and passage space is formed between the mantle of the central tower and the transfer tube.

3. The apparatus according to claim 2, **characterized in that** the unloading devices (28') include a guiding plate (55) for directing the wood chips to the opening (54) in the central tower.

4. The apparatus according to claim 2 or 3, **characterized in that** the central (4) tube in the tower consists of a outer mantle of a vertical screw, the lower part (59) of which mantle being rotating along the lower part (35) of the tower.

5. The apparatus according to claim 2 or 3, **characterized in that** the central tube in the tower consists of a funnel (51) directing the material flow downwards.

## Patentansprüche

1. Vorrichtung zum Speichern von Holzschnitzeln auf einer bogenförmigen Halde (3), bestehend aus einem zentralen Turm (5'), auf dem ein Förderband zum Aufladen der Holzschnitzel abgestützt ist, und einem balkenartigen drehbaren Haldenformerer (6'), und einem Abladebalken (13'), der auf der Ebene der Erde auf dem unteren Teil (35) des Turms sowie auf Stützrädern (29, 44, 45) abgestützt und mit Ablademitteln (28') zum Transportieren der Holzschnitzel in Richtung auf die Mitte (4) der Vorrichtung versehen ist, **dadurch gekennzeichnet, dass**
- in einem ca. 1/3 von dem äußeren Ende des Balkens (13') liegenden Abstand ein Fahrwagen (42) zum Abstützen des Balkens (13') angeordnet ist,
- die Abladeschnecke (28') von einem einzigen, innerhalb des Turms positionierten Antrieb (61) angetrieben wird,
- der Lagerplatz mit einer in der Reichweite der zum Befördern des Materials vorgesehenen Abladeschnecke (28') angeordneten Wand versehen ist.

2. Vorrichtung nach Anspruch 1, **dadurch gekennzeichnet, dass** der zentrale Turm einerseits mit einer rohrartigen exzentrischen Öffnung (54) zur Aufnahme der Holzschnitzel versehen ist, und dass innerhalb des Turms ein zentrales Rohr (51, 59) zum Steuern der Holzschnitzel von der Öffnung aufwärts oder abwärts angeordnet ist, wobei zwischen dem Mantel des zentralen Turms and dem Transportrohr eine Aufwartungs- und Durchgangspassage gebildet ist.

3. Vorrichtung nach Anspruch 2, **dadurch gekennzeichnet, dass** die Ablademittel (28') mit einer Leitplatte (55) zum Steuern der Holzschnitzel in die in dem zentralen Turm befindliche Öffnung (54) versehen sind.

4. Vorrichtung nach Anspruch 2 oder 3, **dadurch gekennzeichnet, dass** das in dem Turm befindliche zentrale Transportrohr (4) aus einem Außenmantel einer vertikalen Förderschnecke besteht, wobei der untere Teil (59) des Außenmantels zusammen mit dem unteren Teil (35) des Turms rotierbar ist.

5. Vorrichtung nach Anspruch 2 oder 3, **dadurch gekennzeichnet, dass** das in dem Turm befindliche Transportrohr aus einem den Materialstrom abwärts richtenden Trichter (51) besteht.

## Revendications

1. Appareil pour le stockage de copeaux de bois en une pile à sommet courbe (3), l'appareil comprenant une tour centrale (5'), qui supporte un transporteur pour charger les copeaux et une composeuse d'empilage en forme de poutre tournante (6'), et une poutre de déchargement (13") supportée au niveau du sol sur la partie inférieure (35) de la tour ainsi que sur des roues d'appui (29, 44, 45) et pourvue de dispositifs de déchargement (28') pour transporter les copeaux de bois vers le centre (4) de l'appareil,
**caractérisé en ce que**
un chariot (42) est agencé pour supporter la poutre de déchargement (13") à une distance d'un tiers environ de l'extrémité extérieure de la poutre,
la vis de déchargement (28') est entraînée seulement par un dispositif d'entraînement (61) placé à l'intérieur de la tour,
la cour d'empilage est équipée d'un mur (48) dans les limites de la portée de la vis de déchargement (28') enlevant le matériau.

2. Appareil selon la revendication 1, **caractérisé en ce que** la tour centrale est équipée, sur un côté, d'une ouverture excentrée en forme de tube (54) pour recevoir les copeaux de bois, et **en ce qu'**un tube central (51, 59) est placé à l'intérieur de la tour pour diriger les copeaux de bois vers le haut ou vers le bas à partir de l'ouverture, de sorte qu'un espace de service et de passage est défini entre la chemise de la tour centrale et le tube de transfert.

3. Appareil selon la revendication 2, **caractérisé en ce que** les dispositifs de déchargement (28') comprennent une plaque de guidage (55) pour diriger les copeaux de bois vers l'ouverture (54) dans la tour centrale.

4. Appareil selon la revendication 2 ou 3, **caractérisé en ce que** le tube central (4) dans la tour consiste en une chemise extérieure d'une vis verticale, la partie inférieure (59) de la dite chemise pouvant tourner le long de la partie inférieure (35) de la tour.

5. Appareil selon la revendication 2 ou 3, **caractérisé en ce que** le tube central dans la tour comprend un entonnoir (51) dirigeant le flux de matériau vers le bas.
